(19) Europäisches Patentamt
European Patent Office
Office européen des brevets

(11) Publication number: 0 127 846
A1

(12) # EUROPEAN PATENT APPLICATION

(21) Application number: 84105888.6

(22) Date of filing: 23.05.84

(51) Int. Cl.$^3$: G 11 B 7/24

(30) Priority: 24.05.83 JP 89919/83

(43) Date of publication of application:
12.12.84 Bulletin 84/50

(84) Designated Contracting States:
DE FR NL

(71) Applicant: FUJI PHOTO FILM CO., LTD.
210 Nakanuma Minami Ashigara-shi
Kanagawa 250-01(JP)

(72) Inventor: Takeji, Ochiai
No. 200, Onakazato
Fujinomiya-shi Shizuoka(JP)

(72) Inventor: Masao, Yabe
No. 200, Onakazato
Fujinomiya-shi Shizuoka(JP)

(74) Representative: Dr. E. Wiegand Dipl.-Ing. W. Niemann
Dr. M. Kohler Dipl.-Ing. J. Glaeser Dr. H.-R. Kressin
Patentanwälte
Herzog-Wilhelm-Strasse 16
D-8000 München 2(DE)

(54) **Information recording medium.**

(57) An information recording medium is disclosed. The medium is comprised of a base plate comprised of glass having on a surface thereof a silane coupling agent layer and having provided on the silane layer a layer comprised of organic polymer material. A recording layer is provided on the layer of organic polymer material. The adhesion between the recording layer and the base glass plate is greatly improved by the use of the silane coupling agent layer and the layer of organic polymer material.

EP 0 127 846 A1

# INFORMATION RECORDING MEDIUM

## FIELD OF THE INVENTION

This invention relates to an information recording medium which writes and/or reads information by laser light, particularly, a light information recording medium using a transparent glass base plate.

## BACKGROUND OF THE INVENTION

Conventionally, recording mediums using high energy beams such as laser light and the like have been used. In these thermal recording mediums, the recording layer has a high optical density and absorbs the irradiated light beam having a high energy density to cause a partial increase in temperature. As a result, the information is recorded by changing the optical characteristics of the light-irradiated part by physical or chemical changes.

These types of recording mediums have various advantages. For example, a high density recording is possible, the writing and reading of information is possible at a high speed, the access time is short, the long-term preservability of information is excellent and the like.

In general, such a thermal recording medium is frequently recorded by converting information to be recorded into electric time series signals and scanning the recording medium with a laser beam the intensity of which is modulated according to the signals. This method is desirable because

recorded images are obtained in real time.

These recording layers (heat mode recording layer) generally include a metal, semimetal or semiconductor such as Bi, Sn, In, Te and the like as a thin layer provided on a glass or transparent plastic base plate by vacuum evaporation or the like as described in U.S. Patents 4,188,214, 4,291,119, 4,069,487, 4,000,334 and 3,665,483.

The occurrence of a scratch or the adhesion of foreign material such as dust and the like on the surface of the recording layer, during the operation or preservation of these recording mediums, often affords bad effects on the information which can be recorded or read. In order to eliminate such disadvantages, a sandwich type (whole surface adhesion type) or air sandwich type information recording medium is used, as described in Canadian Patent 1,029,130 and U.S. Patent 4,074,282.

As the base plate, plastics such as polymethyl methacrylate and the like are generally used from the viewpoint of workability, handling, cost and the like. However, these base plates are easy to scratch and have problems in their dimensional stability and surface property. Accordingly, the glass base plate is more preferably used than plastic base plates. However, glass base plates are brittle, the sensitivity of the recording layer is low as the heat conductivity of the plate is high and the adhesive property with the recording layer is inferior.

In order to eliminate these disadvantages, various polymers are used as an undercoating layer (for example, Japanese Patent Application OPI (Open to Public Inspection) Nos. 138066/82, 77325/76, 46019/78, 157136/80, 142094/81 and the like). The formation of such an undercoating layer could improve the adhesive property of the base plate with the recording layer and the sensitivity of the recording layer to some extent. However, the effect of the materials proposed so far is not yet satisfactory.

Also, the formation of an undercoating layer composed of a chlorinated polyolefin and a particular aminoalkyl alkoxysilane compound has been proposed in U.S. Patent 4,317,123. The undercoating layer composed of such a composition is effective when using plastics as the base plate, but the adhesive property of the base plate with the recording layer and the like were still insufficient when using glass as the base plate.

Therefore, it is desired to develop an undercoating layer which further improves the adhesive property with the recording layer when using glass as the base plate and which also can improve the sensitivity of the recording layer and its preservability.

## SUMMARY OF THE INVENTION

The present inventors found that the above disadvantages can be eliminated by providing an undercoating

layer comprising a layer of a silane coupling agent and a layer of other organic materials on it on the glass base plate.

A primary object of this invention is to provide an information recording medium, which can write and/or read information by laser light on a transparent glass base plate, the medium comprising a glass base plate having thereon in sequence, a silane coupling agent layer, a layer of organic polymer material and a recording layer.

## DETAILED DESCRIPTION OF THE INVENTION

The base plate used in this invention is a disk type transparent glass. Examples of glass include silicate glass (e.g., silicate glass, quartz glass, aluminosilicate glass, invert glass, etc.),borate glass, phosphate glass, germanate glass, tellurite glass, vanadate glass and aluminate glass. The thickness of the base plate is suitably about 1.0 to 1.5 mm.

Various compounds are used as the silane coupling agent in this invention, and commercial compounds can also be used. Examples of preferred silane coupling agents include vinyl trichlorosilane, vinyl trimethoxysilane, vinyl triethoxysilane vinyl tris(β-methoxyethoxy)silane, γ-glycidoxypropyl trimethoxysilane, γ-methacryloyloxypropyl trimethoxysilane, N-β(aminoethyl)-γ-aminopropyl methoxysilane, N-β(aminoethyl)-γ-aminopropylmethyl dimethoxysilane, γ-

chloropropyl trimethoxysilane, γ-mercaptopropyl trimethoxysilane, γ-aminopropyl triethoxysilane, vinyl triacetoxysilane, γ-methacryloxypropyl tris(ß-methoxyethoxy)silane, ß-(3,4-epoxycyclohexyl)ethyl trimethoxysilane, γ-mercaptopropyl trimethoxysilane, vinyl tris(t-butylperoxy)silane, $(CH_3O)_3$-$SiC_3H_6NHC_2H_4NHCH_2CH=CH_2 \cdot HCl$, $(CH_3O)_3SiC_3H_6NHC_2H_4NHCH_2$-COOH, $(CH_3O)_3SiC_3H_6NHCH_2CH=CH_2$, $(CH_3O)_3SiC_3H_6NHCH_2CH=CH_2 \cdot$ HCl, $(CH_3O)_3SiC_3H_6NHC_2H_4NHCH_2CH=CH_2$, $(CH_3O)_3SiC_3H_6$ 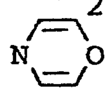, $(CH_3O)_3SiC_3H_6NH$- 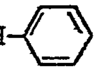 and the like, but this invention can not be limited by these compounds. Among these coupling agents, particularly, the epoxy type silane coupling agents having at least one epoxy group such as γ-glycidoxypropyl trimethoxysilane, ß-(3,4-epoxycyclohexyl)ethyl trimethoxysilane and the like and the aminosilane type coupling agents having at least one amino group such as N-ß-(aminoethyl)-γ-aminopropyl trimethoxysilane, N-ß(aminoethyl)-γ-aminopropyl dimethoxysilane, γ-aminopropyl triethoxysilane and the like are preferably used.

These silane coupling agents, in that condition if they are commercial liquids and after dissolving or dispersing in a proper solvent if they are solid, are coated on the transparent glass base plate by a proper method such as spin coat, dip coat, extrusion coat and bar coat, preferably spin coat and dip coat, and then dried. Examples of solvent

include acetone, methyl ethyl ketone, methyl isobutyl ketone, diacetone alcohol, methyl cellosolve, ethyl cellosolve, butyl cellosplve, methyl cellosolve acetate, ethyl cellosolve acetate, butyl cellosolve acetate, hexane, cyclohexane, ethylene chloride, methylene chloride, benzene, chlorobenzene, methanol, ethanol, propanol, isopropyl alcohol, butanol, petroleum ethers, dimethylformamide, a thinner, and the like. The film thickness of the silane coupling agent layer is preferably 0.01 to 5 μm, particularly 0.1 to 2 μm.

According to this invention, a layer of other organic materials is further provided on the layer of silane coupling agent. Preferred materials include polymers such as polyvinyl chloride, polyester, polyimide, vinyl acetate-vinyl chloride copolymer, ethylene-vinyl acetate copolymer, acetyl cellulose, polyethylene, polyvinylidene chloride, polyethylene fluoride, polyethylene chloride trifluoride, polyvinylidene fluoride, polycarbonate, polypropylene, polybutene, nylon, polystyrene, polystyrene-vinyl toluene copolymer, polyvinyl formal, polyvinyl alcohol, polyacryl resin, polyacryl resin copolymer, polymethacryl resin, polymethacryl resin copolymer, polyethylene chlorosulfonate and the like.

Molecular weight of these materials varies depending on the kind of polymers and it is generally 100 to 300,000, preferably 500 to 100,000. Of these, polyvinyl chloride, polyimide, vinyl acetate-vinyl chloride copolymer,

ethylene-vinyl acetate copolymer, polyvinylidene chloride, polystyrene and styrene-vinyl toluene copolymer are preferably used.

The polymer layer can be formed in the same manner as the layer of above-mentioned silane coupling agent. The thickness of the layer is similary to the above, and is preferred to be 0.01 to 5 μm, particularly 0.1 to 2 μm.

The polymer layer may have a multi-layer structure (generally up to 4-layer structure), each sub-layer of which may have different functions (e.g., further improving the adhesive property with the recording layer or the glass base plate, preventing diffusion of alkalis from the glass base plate, etc.).

The recording layer is formed on the polymer layer. The materials used to make the recording layer are not especially restricted, and the materials used in this technical field, for example, metals such as Te, Zn, In, Sn, Zr, Al, Cu, Ga and the like; semimetals such as Bi, As, Sb and the like; semiconductors such as Ge, Si and the like and their alloys or combinations are used. Also, the sulfates, oxides or fluorides of the metals, semimetals, semiconductors and the like can be used to make recording layer. These recording layers are described in, for example, U.S. Patents 4,188,214, 4,291,119, 4,237,468, 4,415,650, 4,271,256 and 4,388,400. In particularly, the vacuum-evaporated product of these

compounds with metals such as Ge, Sn, In and the like are excellent. For the recording layer, vacuum evaporation, spattering, ion plating and the like are used and the thickness of the recording layer is suitably 300 Å to 1,500 Å as the optical density required for laser information recording.

This invention can apply not only to the mono plate type information recording medium but also to the sandwich type and air sandwich type recording mediums. In the latter case, both recording elements are bonded together through a spacer while facing the recording layers inside, but in this case, the above-mentioned undercoating layer can be formed on the spacer so that the joint of the spacer with the recording elements is made stronger.

As described above, the recording layer is formed on the transparent glass base plate through the layer of silane coupling agent and the polymer layer. This causes the adhesion of the glass base plate with the recording layer to be improved due to the presence of the silane coupling agent. The adhesive property of the recording layer is further improved by properly selecting a polymer layer to be formed on the silane coupling layer. Moreover, characteristics of the recording layer such as sensitivity, memory preservativity, S/N and the like can be improved. The above results are summarized in Table 1.

Evaluation method

Laser output required for recording (mW):

The pulse exposure recording was performed from the side of the base plate using an argon ion laser beam (wavelength 5145 Å) having a maximum output level of 2W. The beam was converged to a beam diameter of 2.5 μm by a lense. The pulse exposure time was 100 nsec. The minimum laser output strength by which the memory trace was formed on each sample was measured. Namely, the smaller the output, the higher the sensitivity.

Adhesive force:

On the recording layer were made rifts by drawing parallel lines at intervals of 1 mm vertically and horizontally drawn on the recording layer in a depth sufficient to reach the glass base plate by a steel knife, to make 100 measures having the area of 1 mm x 1 mm. After sticking a mylar tape (polyethylene terephthalate pressure-sensitive adhesive tape No. 31B, manufactured by Nitto Electric Industrial Co., Ltd.) on the above recording layer, the adhesive force was evaluated by determining the number of 1 mm x 1 mm measures which remained when the mylar tape was strongly stripped off in the upper direction of 90°. The larger the number of strips of memory layer remaining, the better the adhesive force.

Memory preservativity (evaluated at 60°C, 90% RH):

A ··· The surface is good.

B ··· The surface becomes a little blurred.

C ··· The surface becomes blurred to a great extent.

Table 1

| Sample No.* | Undercoating Layer | | Recording Layer | | Laser Output required for recording (mW) | Adhesive force | Memory preservativity |
|---|---|---|---|---|---|---|---|
| | Silane Coupling Agent Layer (0.2µm) | Polymer Layer (0.2µm) | Metal Layer | Compound Layer | | | |
| 1 | None | None | In (250 Å) | GeS (200 Å) | More than 20 | 90/100 | C |
| 2 | 3-(2-aminoethyl)-aminopropyl trimethoxysilane | None | " | " | 15 | 70/100 | B |
| 3 | " | Polymethyl methacrylate | " | " | 11 | 100/100 | A |
| 4 | α-methacryloyloxy-propyl methoxy-silane | None | " | " | 14 | 75/100 | B |
| 5 | " | Polymethyl methacrylate | " | " | 11 | 100/100 | A |
| 6 | Mixture layer of 3-(2-aminoethyl)-aminopropyl trimethoxysilane and polymethyl methacrylate (thickness: 0.4 µm, weight ratio: 1/1) | | " | " | 15 | 70/100 | B |

Note * A glass base plate having a thickness of 1.3 mm was used.

It is seen from the results that the information recording medium having an undercoating layer comprising a silane coupling agent layer and a polymer layer of the present invention (Sample Nos. 3 and 5) have improved recording sensitivity and preservability of information recorded and excellent adhesive property between the glass base plate and the recording layer.

While the invention has been described in detail and with reference to specific embodiment thereof, it will be apparent to one skilled in the art that various changes and modifications can be made therein without departing from the spirit and scope thereof.

WHAT IS CLAIMED IS:

1. An information recording medium, comprising:

a base plate comprised of glass having thereon;

a silane coupling agent layer provided on a surface of the plate;

a layer comprised of organic polymer material provided on the silane coupling agent layer; and

a recording layer provided on the layer of organic polymer material.

2. An information recording medium as claimed in claim 1, wherein the recording layer is capable of reading information by laser light.

3. An information recording medium as claimed in claim 1, wherein the recording layer is capable of writing information by laser light.

4. An information recording medium as claimed in claim 1, wherein the base plate has a thickness in the range of 1.0 to 1.5 mm.

5. An information recording medium as claimed in claim 1, wherein the silane coupling agent layer has a thickness in the range of 0.01 to 5 μm.

6. An information recording medium as claimed in claim 5, wherein the silane coupling agent layer has a thickness in the range of 0.1 to 2 μm.

7. An information recording medium as claimed in

claim 1, wherein the organic polymer material is an organic material selected from the group consisting of polyvinyl chloride, polyimide,vinyl acetate-vinyl chloride copolymer, ethylene-vinyl acetate copolymer, polyvinylidene chloride, polystyrene and styrene-vinyltoluene copolymer.

8. An information recording medium as claimed in claim 1, wherein the layer comprised of organic polymer material has a thickness in the range of 0.01 to 5 µm.

9. An information recording medium as claimed in claim 8, wherein the layer comprised of organic polymer material has a thickness in the range of 0.1 to 2 µm.

10. An information recording medium as claimed in claim 1, wherein the recording layer has a thickness in the range of 300 Å to 1,500 Å.

11. An information recording medium as claimed in claim 10, wherein the recording layer is comprised of a vacuum-evaporated metal selected from the group consisting of Ge, Sn, In.

12. An information recording medium as claimed in claim 1, wherein the silane coupling agent is selected from the group consisting of an epoxy type silane coupling agent and an aminosilane type coupling agent.

European Patent Office

# EUROPEAN SEARCH REPORT

0127846

Application number

EP 84 10 5888

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-2 021 798 (PHILIPS') * Page 2, lines 114-122; page 5, lines 35-64; figure 4; claims 1,10 * | 1-6,8-11 | G 11 B 7/24 |
| A,D | DE-A-2 943 203 (FUJI PHOTO FILM) * Claims 1,4; page 11, last paragraph - page 12, line 2 * | 1-12 | |
| A | FR-A-2 431 144 (HITACHI) * Page 2, line 39 - page 4, line 37; claims 1-6 * | 7 | |
| A | FR-A-2 209 159 (WESTERN ELECTRIC) | | |
| | | | TECHNICAL FIELDS SEARCHED (Int. Cl. 3) |
| | | | G 11 B 7/00 |

The present search report has been drawn up for all claims

| Place of search | Date of completion of the search | Examiner |
|---|---|---|
| THE HAGUE | 29-08-1984 | PHILOSOPH L.P. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82